# EUROPEAN PATENT APPLICATION

(11) **EP 4 545 886 A1**
(43) Date of publication of application: **30.04.2025**
(21) Application number: 23825886.7
(22) Date of filing: 04.04.2023
(51) Int. Cl.: F25D 23/02, F25D 11/02, F25D 29/00

(54) **REFRIGERATION APPARATUS**

(30) Priority: 24.06.2022 CN 202210729339
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: ZHOU, Zhixiang, Qingdao, Shandong 266101 (CN); WANG, Dong, Qingdao, Shandong 266101 (CN); LIU, Min, Qingdao, Shandong 266101 (CN)
(74) Representative: Winter, Brandl - Partnerschaft mbB
(86) International application number: PCT/CN2023/086111
(87) International publication number: WO 2023/246231

(57) **Abstract**

Disclosed in the present invention is a refrigeration apparatus, comprising a box body, a pre-embedded box, a control assembly and a wire structure, wherein the pre-embedded box has a first accommodation compartment and a second accommodation compartment, which are open forwards; the control assembly is arranged in the first accommodation compartment; a door is internally provided with a wire passing channel; the wire structure internally has a wire channel, which is in communication with the wire passing channel; and the wire structure moves relative to the second accommodation compartment. By means of the wire structure, a door wire harness can be effectively prevented from being pulled in the process of opening and closing the door.

## Description

### CROSS REFERENCE TO RELATED APPLICATIONS

The present application claims the priority of Chinese Patent Application filed on June 24, 2022, with application number 202210729339.X, entitled "Refrigeration Apparatus", the entire content of which is incorporated herein by reference.

### TECHNICAL FIELD

The present application relates to the field of refrigeration apparatuses, particularly to a refrigeration apparatus.

### BACKGROUND

Certain models of refrigerators, freezers, and other refrigeration apparatuses have display screens and other components installed on their doors. These components require connection to the control assemblies inside the refrigeration apparatus via harnesses. One existing wiring method involves installing a wire structure adjacent to the hinge on the door, with a wire channel inside the wire structure. An opening is provided at the top of the box body, through which the harness connected to the control assembly passes, enters the wire channel, and then proceeds into the interior of the door. However, the wire structure located at the top of the box body occupies a certain amount of space, reducing the space utilization of the refrigeration apparatus. Particularly for built-in refrigeration apparatuses that are embedded in cabinets, the limited space within the cabinet makes it difficult to install the refrigeration apparatus due to the space occupied by the wire structure.

### SUMMARY

The object of the present application is to provide a refrigeration apparatus with a reversible door opening direction.

In particular, the present application is directed to a refrigeration apparatus, comprising:
a box body having a compartment with a front opening and an accommodation compartment;
a pre-embedded box disposed in the accommodation compartment, the pre-embedded box having a first accommodation compartment and a second accommodation compartment with front openings, the first accommodation compartment and the second accommodation compartment being arranged in a left-right direction;
a control assembly disposed in the first accommodation compartment;
a door disposed at the front of the box body, the door having a wire passing channel inside thereof;
a wire structure installed on the door and extending from the door into the second accommodation compartment, the wire structure having a wire channel inside that is in communication with the wire passing channel, the wire structure being movable relative to the second accommodation compartment.

Further, the wire channel extends to an end of the wire structure that enters the second accommodation compartment and forms an inlet.

Further, the control assembly has a connector installed at its front side, and the refrigeration apparatus further comprises a door harness connected to the connector, the door harness is passing through the opening of the second accommodation compartment, then through the inlet, the wire channel, and the wire passing channel in sequence.

Further, the pre-embedded box has a partition wall separating the first accommodation compartment from the second accommodation compartment, the partition wall has a recess at its front side, and the refrigeration apparatus further comprises a sealing piece installed in the recess, the sealing piece has a wiring hole through which the door harness passes.

Further, the second accommodation compartment is smaller than the first accommodation compartment, the pre-embedded box has a first outlet and a second outlet distributed in the left-right direction and in communication with the first accommodation compartment, the first outlet and the second outlet are located behind the second accommodation compartment.

Further, the refrigeration apparatus further comprises a hinge fixing piece and a hinge assembly, the hinge fixing piece is connected to the pre-embedded box and the box body, the hinge assembly is connected to the hinge fixing piece, and the door is connected to the hinge assembly.

Further, the pre-embedded box has two second accommodation compartments on either side of the first accommodation compartment, the two hinge fixing pieces are symmetrically installed on the pre-embedded box in the left-right direction;
the refrigeration apparatus has a first state in which the hinge assembly is connected to the right hinge fixing piece and the wire structure extends into the right second accommodation compartment, and a second state in which the hinge assembly is connected to the left hinge fixing piece and the wire structure extends into the left second accommodation compartment.

Further, the refrigeration apparatus further comprises a first decorative cover, which covers the right second accommodation compartment when the refrigeration apparatus is in the first state, and covers the left second accommodation compartment when the refrigeration apparatus is in the second state.

Further, the two second accommodation compartments have first slots on the inner walls away from the first accommodation compartment in the left-right direction, and both the top and bottom walls of the two second accommodation compartments have longitudinally symmetrical second slots; the rear side of the first decorative cover has a first fastening part for engaging with the first slot, and two longitudinally symmetrical second fastening parts for engaging with the second slots.

Further, the first decorative cover has a first opening for exposing the second accommodation compartment and a blocking block installed on the first opening, a length of the first opening in a longitudinal direction being greater than a length of the blocking block in the longitudinal direction, the first decorative cover further has a first block fixing portion and a second block fixing portion distributed in the longitudinal direction;
when the refrigeration apparatus is in the first state, the blocking block is connected to the first block fixing portion, and when the refrigeration apparatus is in the second state, the blocking block is connected to the second block fixing portion.

Further, the refrigeration apparatus further comprises a second decorative cover and a third decorative cover symmetrically arranged in the left-right direction, the second decorative cover covers the right second accommodation compartment when the refrigeration apparatus is in the first state, and the third decorative cover covers the left second accommodation compartment when the refrigeration apparatus is in the second state.

Further, the second decorative cover and the third decorative cover respectively have second openings and third openings for exposing the second accommodation compartment.

Further, the top and/or bottom walls of the second accommodation compartment have third slots and guide slots, the guide slots extend horizontally at a preset angle to the left-right direction, and the guide slots forms openings at the front side of the pre-embedded box;
a rear side of the second decorative cover has a third fastening part for engaging with the right third slot and a first guide block for engaging with the right guide slot, and a rear side of the third decorative cover has a fourth fastening part for engaging with the left third slot and a second guide block for engaging with the left guide slot.

Further, the rear side of the second decorative cover further has a first support block for placement on the bottom wall of the second accommodation compartment, and the rear side of the third decorative cover further has a second support block for placement on the bottom wall of the second accommodation compartment.

Further, the pre-embedded box comprises an upper shell and a lower shell connected vertically, the upper shell has first inclined surfaces on both sides, and the lower shell has second inclined surfaces that are complementary to the first inclined surfaces, a front end of the first inclined surface is lower than a rear end of the first inclined surface, or the front end of the first inclined surface is higher than the rear end of the first inclined surface.

Compared to the prior art, the advantageous effects of the present application include: effectively avoiding the phenomenon of door harnesses being pulled during the opening and closing of the door by using a wire structure, and adapting to doors with various motion trajectories. When the door rotates, the harnesses connected to the electronic components of the door and the wire structure move with the door. The wire structure protects the harnesses during their movement. Since the wire structure extends to the pre-embedded box, it enhances space utilization.

### BRIEF DESCRIPTION OF THE DRAWINGS

FIG. 1 is a structural schematic diagram of the refrigeration apparatus in the first state according to an embodiment of the present application;
FIG. 2 is an enlarged view of area A in FIG. 1;
FIG. 3 is a structural schematic diagram of the box body according to an embodiment of the present application;
FIG. 4 is a structural schematic diagram of the refrigeration apparatus in the second state with the inner liner, door, and hinge assembly hidden according to an embodiment of the present application;
FIG. 5 is a structural schematic diagram of the refrigeration apparatus with the front cover assembly, inner liner, door, and hinge assembly hidden according to an embodiment of the present application;
FIG. 6 is an enlarged view of area B in FIG. 5;
FIG. 7 is a structural schematic diagram of the front cover assembly according to an embodiment of the present application;
FIG. 8 is a structural schematic diagram of the hinge fixing piece according to an embodiment of the present application;
FIG. 9 is a structural schematic diagram of an embedded box according to the first embodiment of the present application;
FIG. 10 is an enlarged view of area C in FIG. 9;
FIG. 11 is a structural schematic diagram of the embedded box from another perspective according to the first embodiment of the present application;
FIG. 12 is a structural schematic diagram of the first decorative cover according to the first embodiment of the present application;
FIG. 13 is a structural schematic diagram of an embedded box according to the second embodiment of the present application;
FIG. 14 is a structural schematic diagram of the second decorative cover and the third decorative cover according to the second embodiment of the present application;
FIG. 15 is a structural schematic diagram of the second decorative cover according to the second embodiment of the present application;
FIG. 16 is a structural schematic diagram of part of the embedded box, hinge assembly, wire structure, and drag chain according to an embodiment of the present application;
FIG. 17 is a structural schematic diagram of the door, hinge assembly, wire structure, and drag chain according to an embodiment of the present application; and
FIG. 18 is an enlarged view of area D in FIG. 17.

Wherein:
1. Box body; 101. Outer shell; 102. Inner liner; 103. Compartment; 104. Accommodation compartment;
2. Hinge assembly; 201. First fixing part; 202. Second fixing part; 203. Connecting rod; 204. Third fixing part;
3. Door; 301. Wire passing channel;
4. Front cover assembly; 401. Front cover; 4011. First snap part; 4012. Second snap part; 4013. Positioning portion; 402. First electronic component;
5. Hinge fixing piece; 501. First connecting plate; 5011. Matching hole; 502. Second connecting plate;
6. Control assembly;
7. Pre-embedded box; 701. First accommodation compartment; 702. Second accommodation compartment; 703. First groove; 704. Second groove; 705. First upper matching part; 706. Second upper matching part; 707. First lower matching part; 708. Second lower matching part; 709. Positioning slot; 710. Upper shell; 711. Lower shell; 712. Partition wall; 713. First outlet; 714. Second outlet; 715. First slot; 716. Second slot; 717. Third slot; 718. Guide slot;
8. Wire structure; 801. Wire channel; 802. Shaft part;
9. Sealing piece; 901. Wiring hole;
10. Drag chain;
11. First decorative cover; 1101. First fastening part; 1102. Second fastening part; 1103. First opening; 1104. Blocking block; 11041. Limit protrusion; 11042. Teeth; 1105. First block fixing portion; 1106. Second block fixing portion;
12. Second decorative cover; 1201. Second opening; 1202. Third fastening part; 1203. First guide block; 1204. First support block;
13. Third decorative cover; 1301. Third opening; 1302. Fourth fastening part; 1303. Second guide block; 1304. Second support block.

### DETAILED DESCRIPTION

The following detailed description will be provided with reference to the accompanying drawings, which illustrate specific embodiments of the present application. However, these embodiments are not intended to limit the invention, and any structural, methodological, or functional modifications made by those of ordinary skill in the art based on these embodiments are within the scope of the present application. In the various drawings, certain dimensions of structures or parts may be enlarged relative to others for illustrative purposes, and thus only serve to illustrate the basic structure of the subject matter of the present application.

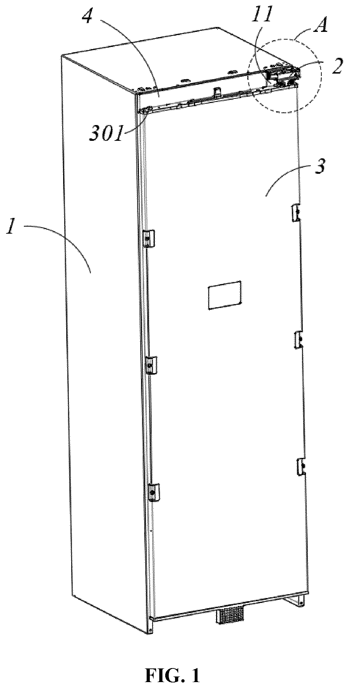

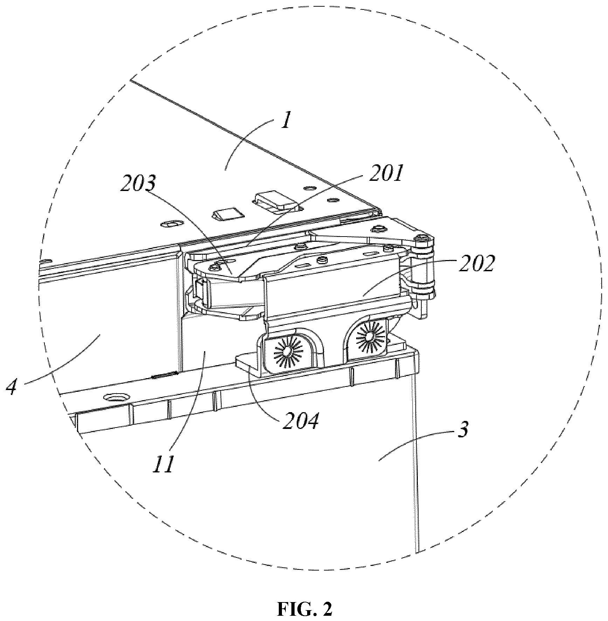

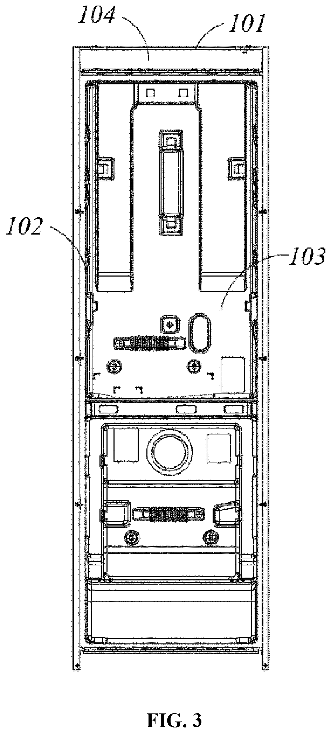

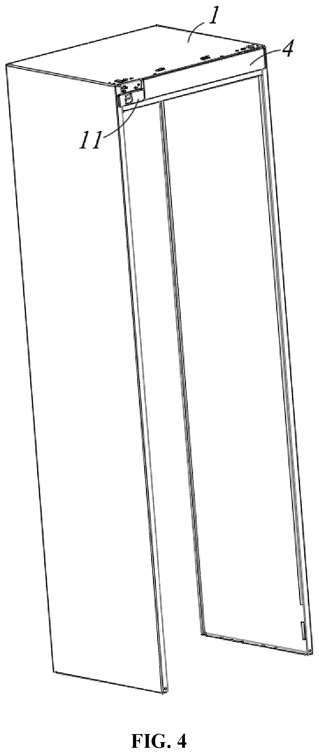

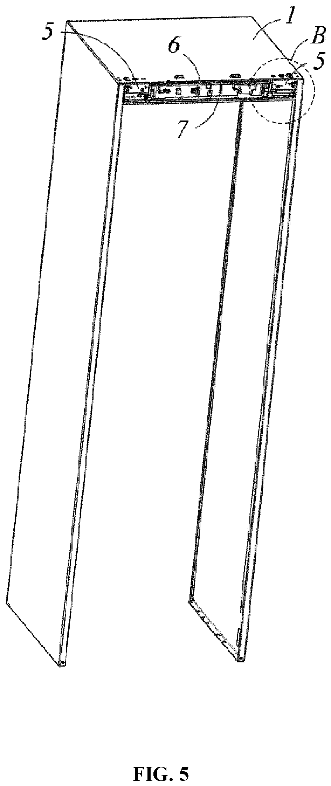

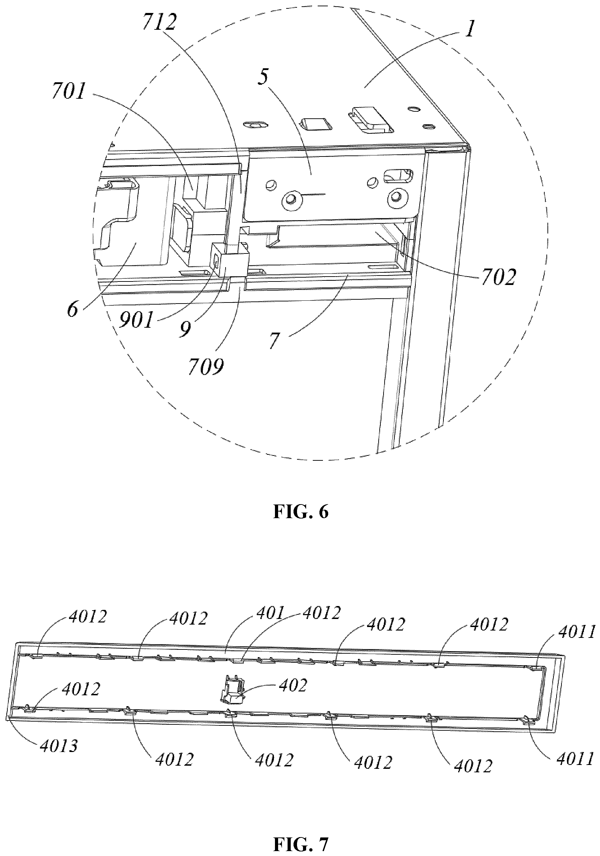

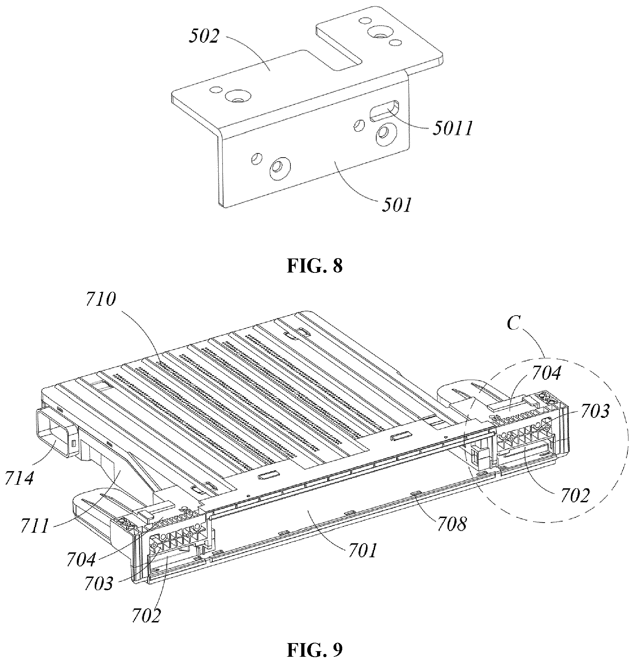

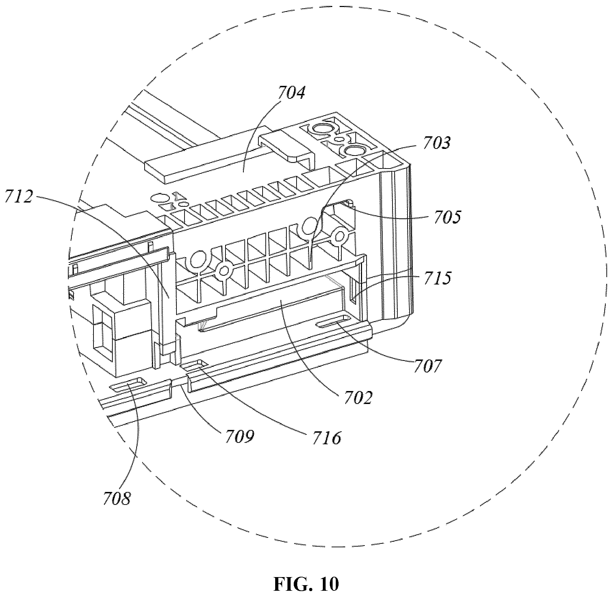

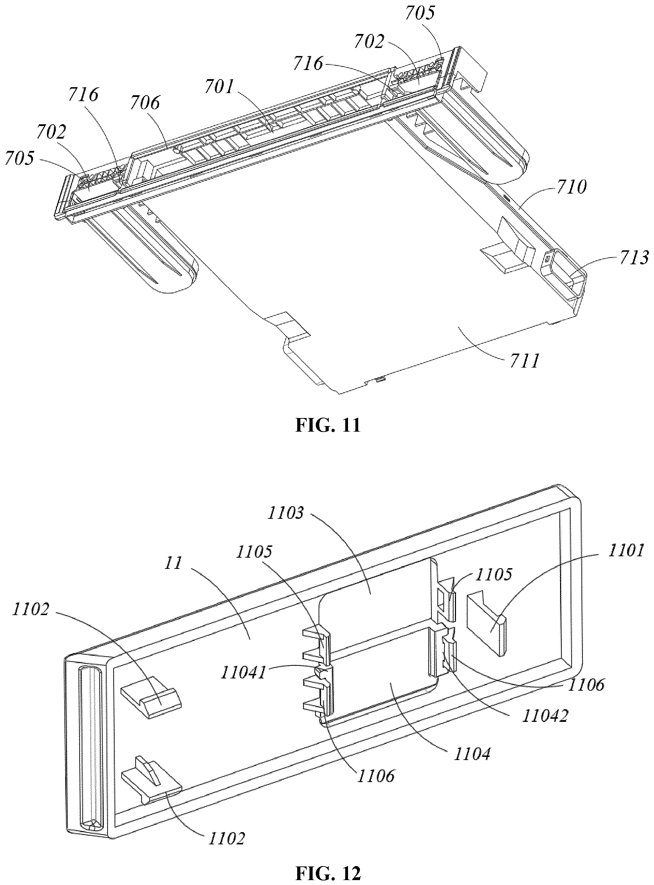

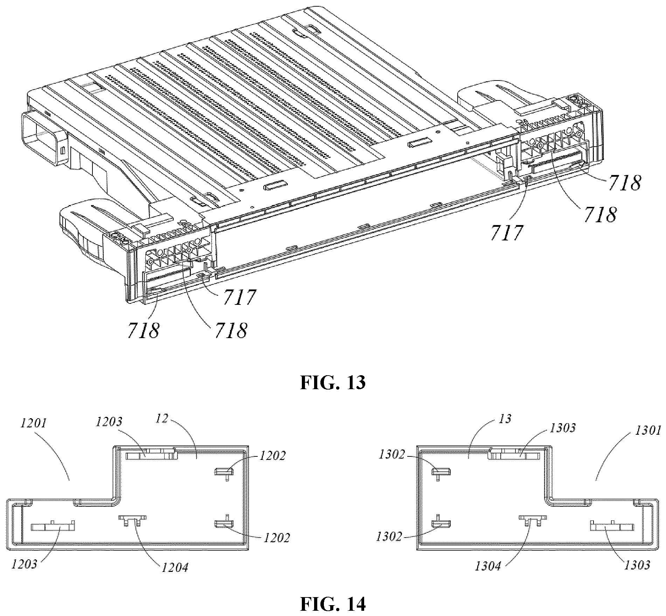

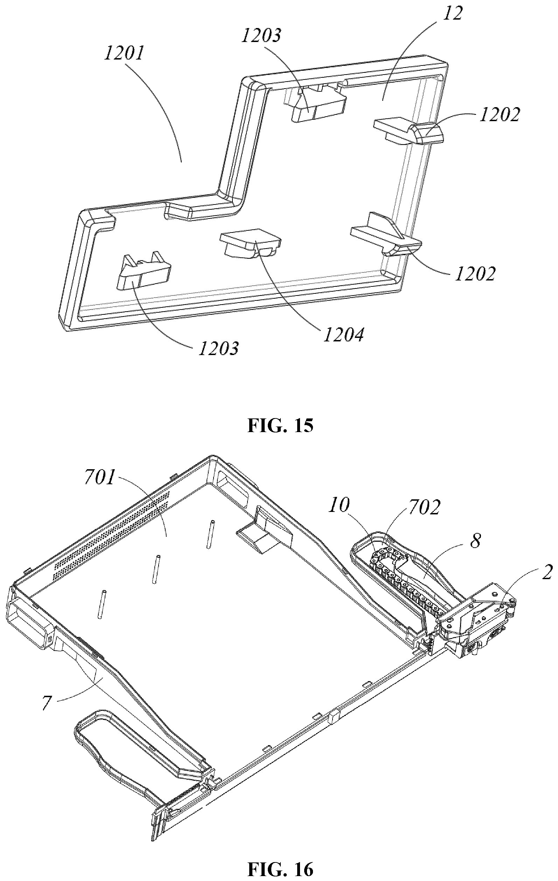

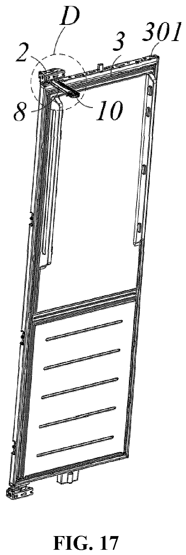

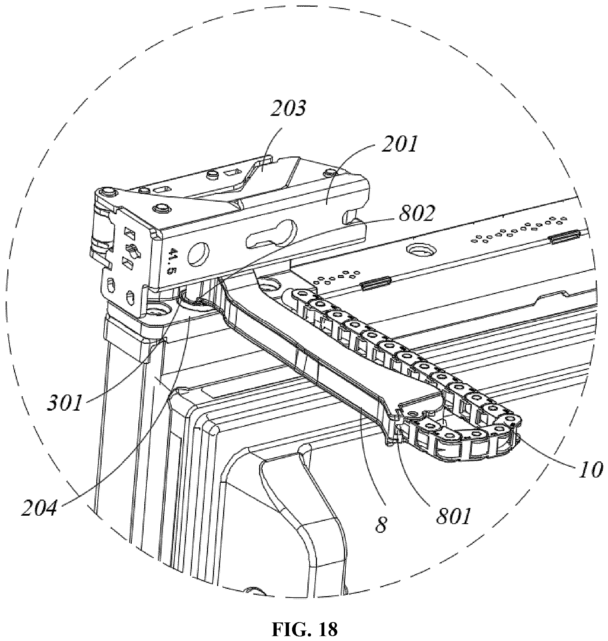

As shown in FIGS. 1 to 18, the present application provides a refrigeration apparatus comprising a box body 1, a door 3, a control assembly 6, a pre-embedded box 7, and a wire structure 8.

The box body 1 has a compartment 103 with a front opening and an accommodation compartment 104. The compartment 103 is used to store items to be refrigerated or frozen, while the accommodation compartment 104 is used to house a main control board and other control assemblies 6 of the refrigeration apparatus.

The pre-embedded box 7 is disposed within the accommodation compartment 104. The pre-embedded box 7 has a first accommodation compartment 701 and a second accommodation compartment 702 with front openings, arranged in a left-right direction.

The control assembly 6 is set within the first accommodation compartment 701.

The door 3 is positioned at the front of the box body 1 and has a wire passing channel 301 inside.

The wire structure 8 is installed on the door 3 and extends from the door 3 into the second accommodation compartment 702. The wire structure 8 has a wire channel 801 inside that is in communication with the wire passing channel 301 and is movable relative to the second accommodation compartment 702.

The wire channel 801 inside the wire structure 8 is used to allow the harnesses connected to the electronic components of the door 3 to pass through. Since the wire structure 8 extends into the pre-embedded box 7, it enhances space utilization. This embodiment effectively avoids the phenomenon of door harnesses being pulled during the opening and closing of the door 3 by using the wire structure 8, and adapts to doors 3 with various motion trajectories. When the door 3 rotates, the harnesses connected to the electronic components of the door 3 and the wire structure 8 move with the door 3. The wire structure 8 protects the harnesses during their movement. Additionally, the second accommodation compartment 702 within the pre-embedded box 7 protects the harnesses, preventing them from being exposed and worn, and separates the moving part of the harnesses from the control assembly 6 in the first accommodation compartment 701, enhancing electrical safety.

The refrigeration apparatus further comprises a front cover assembly 4, a hinge assembly 2, a hinge fixing piece 5, and a door harness.

The hinge fixing piece 5 is connected to the pre-embedded box 7 and the box body 1. The hinge assembly 2 is connected to the hinge fixing piece 5, and the door 3 is connected to the hinge assembly 2.

Two hinge fixing pieces 5 are provided on the front side of the box body 1 in a left-right distribution.

The hinge assembly 2 selectively connects to one of the two hinge fixing pieces 5.

The front cover assembly 4 is positioned in front of the accommodation compartment 104 to cover at least part of the accommodation compartment 104.

The refrigeration apparatus has a first state in which the hinge assembly 2 is connected to the right hinge fixing piece 5, and the front cover assembly 4 covers at least part of the accommodation compartment 104 and the left hinge fixing piece 5, and a second state in which the hinge assembly 2 is connected to the left hinge fixing piece 5, and the front cover assembly 4 covers at least part of the accommodation compartment 104 and the right hinge fixing piece 5.

The direction of opening the door is different in the first and second states, achieving the function of switching the opening direction from left to right, and by adjusting the position of the front cover assembly 4 in the first and second states, the front cover assembly 4 can cover at least part of the accommodation compartment 104 and the hinge fixing piece 5 not connected to the hinge assembly 2 in both the first and second states, enhancing the aesthetic appearance of the refrigeration apparatus while ensuring a simple structure and protecting the unused hinge fixing piece 5.

In one embodiment of the present application, the front cover assembly 4 rotates 180° relative to its position in the second state when the refrigeration apparatus is in the first state. That is, when switching the refrigeration apparatus between the first and second states, the front cover assembly 4 needs to be flipped 180°.

The front cover assembly 4 includes a front cover 401 for covering at least part of the accommodation compartment 104 and one of the two hinge fixing pieces 5, and a first electronic component 402 installed on the rear side of the front cover 401.

Specifically, the first electronic component 402 is a magnetic switch used to detect external temperature. The first electronic component 402 is set on the front cover 401 to ensure the accuracy of external temperature detection.

The box body 1 includes an outer shell 101 and an inner liner 102 located inside the outer shell 101. The space between the bottom wall of the outer shell 101 and the top wall of the inner liner 102 constitutes the accommodation compartment 104.

The control assembly 6 is disposed in the pre-embedded box 7. The control assembly 6 has a connecting portion (not shown) for connecting to the first electronic component 402. The connecting portion connects to the electronic component, allowing the control assembly 6 to be electrically connected to the first electronic component 402, which the control assembly 6 can control.

Specifically, the connecting portion is detachably connected to the first electronic component 402. For example, the connecting portion and the first electronic component 402 can be plugged together, in which case the connecting portion is a connector. The connecting portion and the first electronic component 402 can also be connected through direct contact, in which case the connecting portion is a metal contact piece.

In the first and second states of the refrigeration apparatus, the connecting portion is always connected to the first electronic component 402. The front cover assembly 4 rotates 180° around an axis that passes through a center of the first electronic component 402 and extends in a front-back direction when the refrigeration apparatus is in the first state relative to the second state. This ensures that the position of the center of the first electronic component 402 does not change after the front cover assembly 4 rotating, thereby maintaining the connection between the first electronic component 402 and the connecting portion.

The first electronic component 402 is staggered with a center of the front cover 401 in the left-right direction. When the refrigeration apparatus is in the first state, the first electronic component 402 is located in the right half region of the front cover 401, meaning the area of the front cover 401 on the left side of the first electronic component 402 is larger, facilitating the front cover 401 to cover the left hinge fixing piece 5.

When the refrigeration apparatus is in the second state, the first electronic component 402 is located in the left half region of the front cover 401, meaning the area of the front cover 401 on the right side of the first electronic component 402 is larger, facilitating the front cover 401 to cover the right hinge fixing piece 5.

The first electronic component 402 corresponds to the center of the front cover 401 in height. This way, after the front cover assembly 4 rotates 180°, the height of the center of the first electronic component 402 does not change, thereby preventing the first electronic component 402 from separating from the connecting portion.

The pre-embedded box 7 has a first accommodation compartment 701 and two second storage cavities 702 respectively set on the left and right sides of the first accommodation compartment 701. Both the first accommodation compartment 701 and the second storage cavities 702 have front openings, and the control assembly 6 is set inside the first accommodation compartment 701. The function of the second storage cavities 702 is to house part of the wiring harnesses used to connect to the display screen on the door 3.

When the refrigeration apparatus is in the first state, the front cover assembly 4 covers the first accommodation compartment 701 and the left second accommodation compartment 702, while the right second accommodation compartment 702 is exposed, allowing the wiring harnesses connecting to the display screen on the door 3 to pass through. When the refrigeration apparatus is in the second state, the front cover assembly 4 covers the first accommodation compartment 701 and the right second accommodation compartment 702, while the left second accommodation compartment 702 is exposed, allowing the wiring harnesses connecting to the display screen on the door 3 to pass through. Therefore, the front cover assembly 4 of the present application can also cover the second storage cavities 702 that do not need to allow wiring harnesses to pass through when the refrigeration apparatus is in the first state and the second state, enhancing the aesthetic appearance.

The second storage cavities 702 correspond longitudinally to the hinge fixing pieces 5, facilitating the front cover assembly 4 to cover both the hinge fixing pieces 5 and the second storage cavities 702 simultaneously.

Preferably, the second storage cavities 702 are located below the hinge fixing pieces 5. When the hinge assembly 2 is installed on the hinge fixing pieces 5, the hinge assembly 2 can block at least part of the second storage cavities 702 and part of the wiring harnesses, further enhancing the aesthetic appearance.

The hinge fixing pieces 5 can be integrated with the box body 1 or can be a separate part installed on the box body 1.

Preferably, the hinge fixing piece 5 includes a first connecting plate 501 for connecting to the hinge assembly 2 and a second connecting plate 502 for connecting to the box body 1, with the pre-embedded box 7 located behind the first connecting plate 501.

The first connecting plate 501 is installed on the front side of the pre-embedded box 7, and the second connecting plate 502 is fixed inside the accommodation compartment 104 and located between the pre-embedded box 7 and the top wall of the accommodation compartment 104. The first connecting plate 501 extends longitudinally, and the second connecting plate 502 extends horizontally backward from the top of the first connecting plate 501.

The hinge fixing piece 5 connects to both the box body 1 and the pre-embedded box 7, enhancing the stability of the hinge fixing piece 5, and simultaneously using the hinge fixing piece 5 to fix the pre-embedded box 7 to the box body 1, simplifying the structure.

Specifically, the front side of the pre-embedded box 7 in the area above the second storage cavities 702 and the first connecting plate 501 is provided with a horizontally extending first through-hole, which is used for fastening elements to pass through and connect the first connecting plate 501 to the pre-embedded box 7. The box body 1, the second connecting plate 502, and the pre-embedded box 7 are provided with longitudinally extending second through-holes, which are used for fastening elements to pass through. The second connecting plate 502 and the pre-embedded box 7 are provided with longitudinally extending third through-holes, which are used for fastening elements to pass through and connect the second connecting plate 502 and the pre-embedded box 7 together.

The front part of the pre-embedded box 7 is provided with a first groove 703 for cooperating with the first connecting plate 501, and the top of the pre-embedded box 7 is provided with a second groove 704 for cooperating with the second connecting plate 502. The first groove 703 and the second groove 704 prevent the hinge fixing piece 5 from protruding out of the pre-embedded box 7, preventing the pre-embedded box 7 from not fitting tightly against the top wall of the box body 1 and the front cover 401.

The rear side of the front cover 401 is provided with two sets of snap structures symmetrically distributed up and down. The pre-embedded box 7 has two sets of upper matching structures and lower matching structures distributed up and down, which are used to cooperate with one of the snap structures respectively to fix the front cover assembly 4 when the refrigeration apparatus is in the first state and the second state, ensuring that the front cover 401 can be fixed in both the first state and the second state of the refrigeration apparatus.

When the refrigeration apparatus is in the first state, the upper snap structure cooperates with the upper matching structure, and the lower snap structure cooperates with the lower matching structure. When the refrigeration apparatus is switched to the second state, the front cover 401 is flipped 180°. Since the two sets of snap structures are symmetrically distributed up and down, the positions of the two sets of snap structures are swapped, with the original upper snap structure moving to the lower position and cooperating with the lower matching structure, and the original lower snap structure moving to the upper position and cooperating with the upper matching structure. This way, even if the front cover 401 is flipped, the two sets of snap structures and the two sets of matching structures can still correspond one-to-one, ensuring the reliability of the connection of the front cover 401 while simplifying the structure.

A length of the pre-embedded box 7 in the left-right direction is greater than a length of the front cover 401 in the left-right direction. The upper matching structure includes two first upper matching parts 705 respectively corresponding to the two first connecting plates 501, and a second upper matching part 706 located between the two first upper matching parts 705. The snap structure has a first snap part 4011 for cooperating with the first upper matching part 705, and a second snap part 4012 for cooperating with the second upper matching part 706. The first snap part 4011 and the second snap part 4012 extend backward from the rear side of the front cover 401, and the first connecting plate 501 is provided with a matching hole 5011 for the first snap part 4011 to pass through.

The first snap part 4011 and the second snap part 4012 effectively install the front cover 401 on the pre-embedded box 7, ensuring that even the area of the front cover 401 corresponding to the hinge fixing piece 5 is securely connected to the pre-embedded box 7, preventing the area of the front cover 401 away from the hinge assembly 2 from lifting.

Preferably, an extending length of the first snap part 4011 is greater than an extending length of the second snap part 4012. Since the first snap part 4011 needs to pass through the first connecting plate 501, setting the length of the first snap part 4011 longer enhances the stability of the connection between the first snap part 4011 and the first upper matching part 705.

Specifically, the two first upper matching parts 705 correspond one-to-one with the two first connecting plates 501, each located behind a first connecting plate 501 and corresponding to the matching hole 5011. The first upper matching part 705 includes a groove extending backward from the front side of the pre-embedded box 7 and a protrusion extending downward from the top wall of the groove. The first snap part 4011 engages the rear wall of the protrusion to cooperate with the first upper matching part 705.

The second upper matching part 706 is a groove recessed upward from the top wall of the first accommodation compartment 701 of the pre-embedded box 7. The second snap part 4012 engages the front wall of the second upper matching part 706 to cooperate with the second upper matching part 706.

The lower matching structure includes a first lower matching part 707 set directly below the first upper matching part 705 and a second lower matching part 708 set directly below the second lower matching part 706. Among them, the first lower matching part 707 is a groove recessed downward from the bottom wall of the second accommodation compartment 702, and the second lower matching part 708 is a groove recessed downward from the bottom wall of the first accommodation compartment 701. The first lower matching part 707 is used to engage with the first snap part 4011, and the second lower matching part 708 is used to engage with the second snap part 4012.

To accommodate the longer first snap part 4011, the first lower matching part 707 is located behind the second lower matching part 708.

Further, the second upper matching part 706 and the second lower matching part 708 can be a single groove extending in the left-right direction or multiple grooves distributed in the left-right direction.

Further, one end of the front cover 401 in the left-right direction is provided with a positioning portion 4013 extending backward, and the positioning portion 4013 is set on the end of the front cover assembly 4 close to the first electronic component 402. The front side of the pre-embedded box 7 is provided with a positioning slot 709 between the first accommodation compartment 701 and the second storage cavities 702. One positioning slot 709 is between the first accommodation compartment 701 and the left second accommodation compartment 702, and the other positioning slot 709 is between the first accommodation compartment 701 and the right second accommodation compartment 702.

When the refrigeration apparatus is in the first state, the positioning portion 4013 cooperates with the positioning slot 709 on the right. When the refrigeration apparatus is in the second state, the positioning portion 4013 cooperates with the positioning slot 709 on the left, thus serving as a positioning function during the assembly of the front cover 401, facilitating the assembly of the front cover 401 by the staff, and enhancing the stability of the front cover 401 through the cooperation of the positioning portion 4013 and the positioning slot 709.

The pre-embedded box 7 includes an upper shell 710 and a lower shell 711 connected up and down. The left and right sides of the upper shell 710 are provided with a pair of first inclined surfaces, and the lower shell 711 has a pair of second inclined surfaces matching the first inclined surfaces. A front end of the first inclined surface is lower than a rear end of the first inclined surface, or a front end of the first inclined surface is higher than the rear end of the first inclined surface. The first inclined surface and the second inclined surface serve as a positioning function when the upper shell 710 and the lower shell 711 are connected, facilitating the assembly of the upper shell 710 and the lower shell 711.

The wire structure 8 is installed on the door 3 and extends from the door 3 to the inside of the second accommodation compartment 702. The door 3 is provided with a wire passing channel 301. The wire structure 8 internally has a wire channel 801 communicating with the wire passing channel 301, and the wire structure 8 is movable relative to the second accommodation compartment 702.

Among them, the wire channel 801 in the wire structure 8 is used to allow the wiring harnesses connected to the electronic components of the door 3 to pass through. Since the wire structure 8 extends into the pre-embedded box 7, it enhances the utilization of space. This embodiment effectively avoids the phenomenon of the door wiring harnesses being pulled during the opening and closing of the door 3 through the wire structure 8, and can adapt to door bodies 3 with various motion trajectories. When the door 3 rotates, the wiring harnesses connected to the electronic components of the door 3 and the wire structure 8 move with the door 3, and the wire structure 8 protects the wiring harnesses during the movement of the wiring harnesses. The second accommodation compartment 702 inside the pre-embedded box 7 can protect the wiring harnesses, preventing them from being exposed and worn, and also separates the moving part of the wiring harnesses from the control assembly 6 inside the first accommodation compartment 701, enhancing electrical safety.

Specifically, the door 3 is provided with two wire passing channels 301 distributed left and right, and both wire passing channels 301 extend to the top of the door 3 to form openings.

When the refrigeration apparatus is in the first state, the wire structure 8 extends into the right second accommodation compartment 702 and connects to the right wire passing channel 301. When the refrigeration apparatus is in the second state, the wire structure 8 extends into the left second accommodation compartment 702 and connects to the left wire passing channel 301.

Specifically, the wire channel 801 extends to an end of the wire structure 8 that extends into the second accommodation compartment 702 and forms an inlet.

The front side of the control assembly 6 is installed with a connector (not shown), and the refrigeration apparatus further includes a door wiring harness (not shown), which is connected to the connector and passes through the opening of the second accommodation compartment 702, then sequentially through the inlet, wire channel 801, and wire passing channel 301.

Further, the pre-embedded box 7 has a partition wall 712 separating the first accommodation compartment 701 from the second accommodation compartment 702, and the front side of the partition wall 712 has a recess. The refrigeration apparatus further includes a sealing piece 9 installed in the recess, which has a wiring hole 901 for the door wiring harness to pass through. The sealing piece 9 is used to allow the door wiring harness to pass through and also enhances the sealing of the first accommodation compartment 701, thereby improving electrical safety.

Further, the wire structure 8 has a shaft part 802 extending into the wire passing channel 301 from the top opening of the wire passing channel 301, and the shaft part 802 can rotate relative to the wire passing channel 301, thereby rotating the wire structure 8 installed on the door 3.

The hinge assembly 2 includes a first fixing part 201 for connecting to the hinge fixing piece 5, a second fixing part 202 for connecting to the door 3, and at least one connecting rod 203, with the first fixing part 201 and the second fixing part 202 respectively pivotally connected to a connecting rod 203.

The first fixing part 201 is located above the wire structure 8 and the second accommodation compartment 702, the second fixing part 202 protrudes downward relative to the first fixing part 201 and is located in front of the wire structure 8. The second fixing part 202 can cover the opening of the wire structure 8 and the second accommodation compartment 702, thereby enhancing the aesthetic appearance of the refrigeration apparatus.

Further, the hinge assembly 2 further includes a third fixing part 204, with the second fixing part 202 installed on the door 3 through the third fixing part 204. The second fixing part 202 and the third fixing part 204 are connected by fasteners, and the third fixing part 204 and the top of the door 3 are connected by fasteners. The top of the door 3 is provided with a positioning ring surrounding the top opening of the wire passing channel 301, and the third fixing part 204 has a hole for fitting over the positioning ring.

When the refrigeration apparatus needs to switch between the first state and the second state, requiring the hinge assembly 2 to be installed on different sides of the hinge fixing piece 5, the second fixing part 202, the third fixing part 204, and the connecting rod 203 are separated, then the first fixing part 201 and the connecting rod 203 are flipped 180°, so that the first fixing part 201 and the connecting rod 203 are symmetrical in the left-right direction when installed on different sides, and finally the second fixing part 202 and the third fixing part 204 are moved parallel and then the second fixing part 202 is installed on the connecting rod 203 and the third fixing part 204 is installed on the door 3.

The second accommodation compartment 702 is smaller than the first accommodation compartment 701, and the pre-embedded box 7 has a first outlet 713 and a second outlet 714 distributed in the left-right direction and communicating with the first accommodation compartment 701, with the first outlet 713 and the second outlet 714 located behind the second accommodation compartment 702. Since there are more components inside the first accommodation compartment 701, the first accommodation compartment 701 is made larger, and the area behind the smaller second accommodation compartment 702 of the pre-embedded box 7 is used to allow the wiring harnesses connected to the control assembly 6 to pass through.

The first outlet 713 and the second outlet 714 can be used to allow low-voltage and high-voltage wiring harnesses to pass out of the pre-embedded box 7 respectively, avoiding the crossover of high-voltage and low-voltage wiring harnesses inside the control assembly 6, reducing electromagnetic interference from high voltage to low voltage, and ensuring the performance of the refrigeration apparatus.

In a preferred embodiment of the present application, the refrigeration apparatus further includes a drag chain 10 set inside the second accommodation compartment 702, with the fixed end of the drag chain 10 fixed to the inner wall of the second accommodation compartment 702, and the movable end of the drag chain 10 installed at the end of the wire structure 8 away from the door 3, and the movable end of the drag chain 10 follows the wire structure 8 while moving. The door wiring harness entering the second accommodation compartment 702 first passes through the drag chain 10, then enters the wire channel 801. The drag chain 10 further protects the door wiring harness, preventing it from being worn during the movement of the door 3 and the wire structure 8.

During the use of the refrigeration apparatus, the front cover 401 only covers one side of the second accommodation compartment 702, and the larger opening of the other side of the second accommodation compartment 702 is exposed, affecting the aesthetic appearance. Therefore, the following two embodiments provide two different solutions for covering the second accommodation compartment 702.

In the first embodiment of the present application, the refrigeration apparatus further includes a first decorative cover 11. When the refrigeration apparatus is in the first state, the first decorative cover 11 covers the right second accommodation compartment 702; when the refrigeration apparatus is in the second state, the first decorative cover 11 covers the left second accommodation compartment 702.

In this embodiment, there is only one first decorative cover 11, and by adjusting the position of the first decorative cover 11 during the switching process between the first state and the second state of the refrigeration apparatus, the second accommodation compartment 702 on both sides can be covered, simplifying the structure.

The first decorative cover 11 has a first opening 1103 for exposing the second accommodation compartment 702. The first opening 1103 is used to allow the wire structure 8 and the door wiring harness inside the wire structure 8 to pass through.

The inner walls of the two second storage cavities 702 away from the first accommodation compartment 701 in the left-right direction are provided with first slots 715, and the top and bottom walls of the two second storage cavities 702 are provided with second slots 716 longitudinally symmetrical; the rear side of the first decorative cover 11 has a first fastening part 1101 for cooperating with the first slot 715, and two second fastening parts 1102 longitudinally symmetrical for cooperating with the second slots 716. When the refrigeration apparatus needs to change the position of the first decorative cover 11 between the first state and the second state, the first decorative cover 11 needs to be rotated 180° to adapt to the first slots 715 and second slots 716 on the inner walls of the second storage cavities 702 on both sides.

When the refrigeration apparatus is in the first state, the first fastening part 1101 is located in the right part of the first decorative cover 11, the first fastening part 1101 cooperates with the first slot 715 on the right, the upper second fastening part 1102 cooperates with the upper second slot 716, and the lower second fastening part 1102 cooperates with the lower second slot 716. When the refrigeration apparatus is in the second state, the first decorative cover 11 is rotated 180° relative to the previous state, the first fastening part 1101 is located in the left part of the first decorative cover 11, and the first fastening part 1101 cooperates with the first slot 715 on the left. The original upper second fastening part 1102 moves to the lower position and cooperates with the lower second slot 716, and the original lower second fastening part 1102 moves to the upper position and cooperates with the upper second slot 716.

In this embodiment, the first decorative cover 11 is rotated instead of simply moving parallel during the switching between the first state and the second state of the refrigeration apparatus, so that the first fastening part 1101 of the first decorative cover 11 is symmetrical in the left-right direction when the refrigeration apparatus is in the first state and the second state, facilitating the cooperation of the first fastening part 1101 with the symmetrical first slots 715 on both sides.

Limited by the installation position of the wire structure 8, the first opening 1103 cannot be set in the center of the first decorative cover 11. If the first decorative cover 11 is only moved parallel when installed on different sides, the position of the first opening 1103 is asymmetrical in the first state and the second state, and the wire structure 8 cannot pass through the first opening 1103 into the second accommodation compartment 702. By rotating the first decorative cover 11, the symmetry of the first opening 1103 in the first state and the second state can be ensured, ensuring that the wire structure 8 and the wiring harness inside the wire structure 8 can pass through the first opening 1103 in both the first state and the second state.

Further, the area of the first decorative cover 11 is larger than the area of the opening of the second accommodation compartment 702. In this way, the first decorative cover 11 can also cover the walls of the pre-embedded box 7, further enhancing the aesthetic appearance.

Since the wire structure 8 is located above the door 3, and limited by the volume of the refrigeration apparatus, the box body 1 cannot be much higher than the door 3, thus the accommodation compartment 104 has a smaller longitudinal length and cannot ensure enough space for the center of the wire structure 8 to be at the same height as the center of the opening of the first accommodation compartment 701. Therefore, the center of the first decorative cover 11 cannot be ensured to be at the same height as the center of the wire structure 8. After the first decorative cover 11 is rotated, the wire structure 8 may not be able to pass through the first through-hole.

To solve the above problem, the first decorative cover 11 further has a blocking block 1104 installed on the first opening 1103. A longitudinal length of the first opening 1103 is greater than a longitudinal length of the blocking block 1104, and the first decorative cover 11 further has a first block fixing portion 1105 and a second block fixing portion 1106 distributed longitudinally.

When the refrigeration apparatus is in the first state, the blocking block 1104 is connected to the first block fixing portion 1105, and the area of the first opening 1103 not covered by the blocking block 1104 is used for the wire structure 8 and the wiring harness inside the wire structure 8 to pass through. When the refrigeration apparatus is in the second state, the blocking block 1104 is connected to the second block fixing portion 1106, and the area of the first opening 1103 not covered by the blocking block 1104 is used for the wire structure 8 and the wiring harness inside the wire structure 8 to pass through.

After the first decorative cover 11 is rotated, by moving the blocking block 1104 up and down, the exposed position of the first opening 1103 can be made symmetrical in the left-right direction, ensuring that the first decorative cover 11 can effectively cover the opening of the second accommodation compartment 702 while preventing the wire structure 8 from not being able to pass through the first decorative cover 11.

Specifically, the first block fixing portion 1105 and the second block fixing portion 1106 are set on the rear side of the first decorative cover 11. Two first block fixing portions 1105 are symmetrically set on both sides of the first opening 1103, and two second block fixing portions 1106 are symmetrically set on both sides of the first opening 1103. The first block fixing portion 1105 and the second block fixing portion 1106 are both provided with horizontally extending holes. The two sides of the blocking block 1104 have limit protrusions 11041 for abutting against the rear side of the first decorative cover 11, and the limit protrusions 11041 are provided with teeth 11042 for cooperating with the first block fixing portion 1105 and the second block fixing portion 1106.

The sealing piece 9 is set behind the front cover 401 and the first decorative cover 11. In this way, the wiring harness passing through the sealing piece 9 is blocked by the first decorative cover 11 and will not be exposed, which not only enhances the aesthetic appearance but also prevents the wiring harness from being worn due to exposure.

In the third embodiment of the present application, the refrigeration apparatus further includes a second decorative cover 12 and a third decorative cover 13 symmetrically distributed in a left-right direction. When the refrigeration apparatus is in the first state, the second decorative cover 12 covers the right second accommodation compartment 702, and when the refrigeration apparatus is in the second state, the third decorative cover 13 covers the left second accommodation compartment 702.

The second decorative cover 12 and the third decorative cover 13 are respectively provided with second openings 1201 and third openings 1301 for exposing the second accommodation compartment 702.

The top and/or bottom walls of the second storage cavities 702 are provided with third slots 717 and guide slots 718. The guide slots 718 extend horizontally with an extending direction at a preset angle to the left-right direction, and the guide slots 718 form openings on the front side of the pre-embedded box 7.

A rear side of the second decorative cover 12 has a third fastening part 1202 for cooperating with the third slot 717 on the right and a first guide block 1203 for cooperating with the guide slot 718 on the right, a rear side of the third decorative cover 13 has a fourth fastening part 1302 for cooperating with the third slot 717 on the left and a second guide block 1303 for cooperating with the guide slot 718 on the left.

When assembling the second decorative cover 12, the first guide block 1203 is inserted from front to back into the guide slot 718, then the second decorative cover 12 is pushed to make the first guide block 1203 move along the guide slot 718 until the third fastening part 1202 cooperates with the third slot 717. When assembling the third decorative cover 13, the second guide block 1303 is inserted from front to back into the guide slot 718, then the third decorative cover 13 is pushed to make the second guide block 1303 move along the guide slot 718 until the fourth fastening part 1302 cooperates with the third slot 717. The rear side of the second decorative cover 12 further has a first support block 1204 for placing on the bottom wall of the second accommodation compartment 702.

The rear side of the third decorative cover 13 further has a second support block 1304 for placing on the bottom wall of the second accommodation compartment 702. The first support block 1204 and the second support block 1304 are respectively used to enhance the stability of the second decorative cover 12 and the third decorative cover 13.

The detailed descriptions listed above are merely specific explanations for the feasible implementation of the present application and are not intended to limit the protection scope of the present application. Any equivalent implementation or modification made without departing from the spirit of the present application should be included within the protection scope of the present application.

## Claims

1. A refrigeration apparatus, comprising:
a box body having a compartment with a front opening and an accommodation compartment;
a pre-embedded box disposed in the accommodation compartment, the pre-embedded box having a first accommodation compartment and a second accommodation compartment with front openings, the first accommodation compartment and the second accommodation compartment being arranged in a left-right direction;
a control assembly disposed in the first accommodation compartment;
a door disposed at the front of the box body, the door having a wire passing channel inside thereof;
a wire structure installed on the door and extending from the door into the second accommodation compartment, the wire structure having a wire channel inside that is in communication with the wire passing channel, the wire structure being movable relative to the second accommodation compartment.

2. The refrigeration apparatus according to claim 1, wherein the wire channel extends to an end of the wire structure that enters the second accommodation compartment and forms an inlet.

3. The refrigeration apparatus according to claim 2, wherein the control assembly has a connector installed at its front side, and the refrigeration apparatus further comprises a door harness connected to the connector, the door harness is passing through the opening of the second accommodation compartment, then through the inlet, the wire channel, and the wire passing channel in sequence.

4. The refrigeration apparatus according to claim 3, wherein the pre-embedded box has a partition wall separating the first accommodation compartment from the second accommodation compartment, the partition wall has a recess at its front side, and the refrigeration apparatus further comprises a sealing piece installed in the recess, the sealing piece has a wiring hole through which the door harness passes.

5. The refrigeration apparatus according to claim 1, wherein the second accommodation compartment is smaller than the first accommodation compartment, the pre-embedded box has a first outlet and a second outlet distributed in the left-right direction and in communication with the first accommodation compartment, the first outlet and the second outlet are located behind the second accommodation compartment.

6. The refrigeration apparatus according to claim 1, wherein the refrigeration apparatus further comprises a hinge fixing piece and a hinge assembly, the hinge fixing piece is connected to the pre-embedded box and the box body, the hinge assembly is connected to the hinge fixing piece, and the door is connected to the hinge assembly.

7. The refrigeration apparatus according to claim 6, wherein the pre-embedded box has two second accommodation compartments on either side of the first accommodation compartment, the two hinge fixing pieces are symmetrically installed on the pre-embedded box in the left-right direction;
the refrigeration apparatus has a first state in which the hinge assembly is connected to the right hinge fixing piece and the wire structure extends into the right second accommodation compartment, and a second state in which the hinge assembly is connected to the left hinge fixing piece and the wire structure extends into the left second accommodation compartment.

8. The refrigeration apparatus according to claim 7, wherein the refrigeration apparatus further comprises a first decorative cover, which covers the right second accommodation compartment when the refrigeration apparatus is in the first state, and covers the left second accommodation compartment when the refrigeration apparatus is in the second state.

9. The refrigeration apparatus according to claim 8, wherein the two second accommodation compartments have first slots on the inner walls away from the first accommodation compartment in the left-right direction, and both the top and bottom walls of the two second accommodation compartments have longitudinally symmetrical second slots; the rear side of the first decorative cover has a first fastening part for engaging with the first slot, and two longitudinally symmetrical second fastening parts for engaging with the second slots.

10. The refrigeration apparatus according to claim 8, wherein the first decorative cover has a first opening for exposing the second accommodation compartment and a blocking block installed on the first opening, a length of the first opening in a longitudinal direction being greater than a length of the blocking block in the longitudinal direction, the first decorative cover further has a first block fixing portion and a second block fixing portion distributed in the longitudinal direction;
when the refrigeration apparatus is in the first state, the blocking block is connected to the first block fixing portion, and when the refrigeration apparatus is in the second state, the blocking block is connected to the second block fixing portion.

11. The refrigeration apparatus according to claim 7, wherein the refrigeration apparatus further comprises a second decorative cover and a third decorative cover symmetrically arranged in the left-right direction, the second decorative cover covers the right second accommodation compartment when the refrigeration apparatus is in the first state, and the third decorative cover covers the left second accommodation compartment when the refrigeration apparatus is in the second state.

12. The refrigeration apparatus according to claim 11, wherein the second decorative cover and the third decorative cover respectively have second openings and third openings for exposing the second accommodation compartment.

13. The refrigeration apparatus according to claim 11, wherein the top and/or bottom walls of the second accommodation compartment have third slots and guide slots, the guide slots extend horizontally at a preset angle to the left-right direction, and the guide slots forms openings at the front side of the pre-embedded box;
a rear side of the second decorative cover has a third fastening part for engaging with the right third slot and a first guide block for engaging with the right guide slot, and a rear side of the third decorative cover has a fourth fastening part for engaging with the left third slot and a second guide block for engaging with the left guide slot.

14. The refrigeration apparatus according to claim 13, wherein the rear side of the second decorative cover further has a first support block for placement on the bottom wall of the second accommodation compartment, and the rear side of the third decorative cover further has a second support block for placement on the bottom wall of the second accommodation compartment.

15. The refrigeration apparatus according to claim 1, wherein the pre-embedded box comprises an upper shell and a lower shell connected vertically, the upper shell has first inclined surfaces on both sides, and the lower shell has second inclined surfaces that are complementary to the first inclined surfaces, a front end of the first inclined surface is lower than a rear end of the first inclined surface, or the front end of the first inclined surface is higher than the rear end of the first inclined surface.
